# DEMANDE DE BREVET EUROPEEN

(11) **EP 3 026 196 A1**
(43) Date de publication de la demande: **01.06.2016**
(21) Numéro de dépôt: 15188875.7
(22) Date de dépôt: 08.10.2015
(51) Int. Cl.: E04F 13/08, E06B 3/54, F16C 11/08

(54) **DISPOSITIF DE FIXATION À ROTULE**

(30) Priorité: 26.11.2014 FR 1461515
(71) Demandeur: SB Ingénierie, 74330 Poisy (FR)
(72) Inventeur: Giacometti, Sylviane, 74330 Choisy (FR); Fievet, Frédéric, 74540 Gruffy (FR)
(74) Mandataire: Gevers & Orès

(57) **Abrégé**

Dispositf de fixation 10 destiné à solidariser un panneau 11 en verre à une structure 12, le dispositif de fixation étant composé d'un élément de liaison 13 à tête de rotule 14 prolongée par un axe 15 allongéel, et d'un corps de rotule 16 pourvu d'un évidement 21 cylindrique.

La tête de rotule 14 est dotée d'un index 19, logé dans un trou oblong 23 au fond de l'évidement 21 cylindrique. Un mouvement relatif entre la pièce de liaison 13 et le corps de rotule 16 est apte à assurer un déplacement par pivotement limité selon une première direction, et un blocage angulaire inhibant tout déplacement selon une deuxième direction, orthogonale à ladite première.

## Description

### Domaine technique de l'invention

L'invention concerne un dispositif de fixation destiné à solidariser un panneau à une structure, le dispositif de fixation étant composé :
- d'un élément de liaison doté d'une tête de rotule prolongée par un axe allongé à filetage extérieur,
- et d'un corps de rotule en forme de douille cylindrique pourvue d'un évidement servant de logement à la tête de rotule, laquelle comporte un index s'étendant à l'opposé de l'axe allongé, et en alignement longitudinal avec ce dernier,

### Etat de la technique

Le document EP 959256 décrit un système de fixation articulé a rotule pour l'assemblage de panneaux en verre à une structure fixe. La rotule est généralement de forme sphérique, et est logée dans une douille cylindrique pour constituer une articulation multidirectionnelle. Habituellement les panneaux en verre sont fixés aux quatre coins par ce type de système de fixation pour absorber les déformations dues aux contraintes climatiques (vent, dilatations) et structurelles. Le nombre de rotules de fixation pour une installation est important, et est conservé indépendamment du type et du poids des panneaux en verre.

Le document WO 2012/154916 décrit une articulation à rotule pour un mécanisme de suspension ou de direction d'une automobile, la rotule étant équipée d'un plot logé dans une encoche du palier. Ce dernier présente une forme non cylindrique, et est constitué par deux parties en matériaux différents.

### Objet de l'invention

L'objet de l'invention consiste à réaliser un dispositif de fixation d'un panneau en verre à une structure, et comprenant une articulation à rotule perfectionnée permettant de définir le mouvement relatif angulaire des pièces de l'articulation.

Le dispositif selon l'invention est caractérisé en ce que
- l'évidement de logement de la rotule est cylindrique, et possède un fond pourvu d'un trou oblong dans lequel s'engage l'index pour définir un mouvement relatif entre la pièce de liaison et le corps de rotule, apte à assurer un déplacement par pivotement limité selon une première direction, et un blocage angulaire inhibant tout déplacement selon une deuxième direction, orthogonale à ladite première,
- le trou oblong est agencé au centre d'une collerette d'appui faisant partie du corps de rotule, la longueur dudit trou oblong déterminant l'amplitude maximum du mouvement de pivotement, tandis que l'écartement entre les faces parallèles opposées correspond au diamètre de l'index,
- et un organe amortisseur est inséré dans l'évidement avant l'engagement axial de la tête de rotule, l'organe amortisseur étant formé par une rondelle en matériau plastique ayant un profil extérieur circulaire qui s'ajuste dans un épaulement annulaire à l'intérieur de l'évidement.

Selon une caractéristique de l'invention, la rondelle est pourvue d'une ouverture centrale débouchante ayant une forme oblongue similaire à celle du trou oblong du corps de rotule.

L'invention s'applique à tout type d'installations ou facades en verre, et préférentiellement à des brises soleil utilisant des panneaux rectangulaires, dont la largeur est inférieure à la longueur. Le montage avec seulement deux rotules selon l'invention à la place de quatre, permet de conserver un mouvement de rotation des dispositifs de fixation pour absorber les déformations dans le sens de la longueur du panneau (axe X libre), mais en empêchant la rotation du panneau dans sa largeur (axe Y bloqué).

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- les figures 1 et 2 sont des vues schématiques en coupe d'un panneau en verre relié à une structure fixe par un dispositif de fixation selon l'invention, respectivement dans l'état débloqué autorisant un mouvement de pivotement limité selon une prelière direction, et dans l'état bloqué inhibant tout mouvement selon une deuxième direction orthogonale à la première ;
- la figure 2A montre une vue de profil qui indique les deux possibilités bloqué ou débloqué par rapport à l'agencement du trou oblong ;
- la figure 3 est une vue éclaté en perspective du dispositif de fixation selon les figures 1 ou 2 ;
- les figures 4 et 5 sont des vues en coupe de la figure 3, respectivement selon deux axes orthogonaux représentatifs de l'état bloqué et de l'état débloqué ;
- les figures 6 et 7 sont des vues en coupe du dispositif de fixation des figures 4 et 5, et en position assemblée de l'élément de liaison dans le corps de rotule, lequel est représenté mobile avec le panneau, tandis que l'élément de liaison est fixe;
- la figure 8 est une variante de réalisation avec inversion du mouvement relatif, le corps de rotule étant fixe, et l'élément de liaison est susceptible de pivoter de +/- 15° autour de l'axe y ;
- la figure 9 montre un exemple d'utilisation d'un panneau de brise soleil avec montage à deux rotules selon l'invention.

### Description d'un mode particulier de réalisation

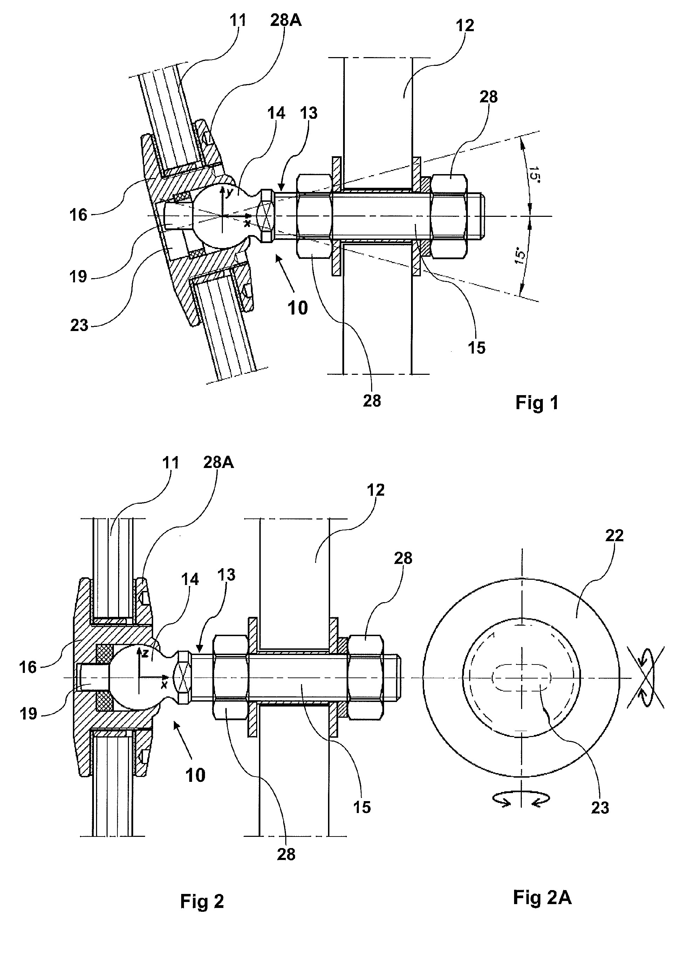

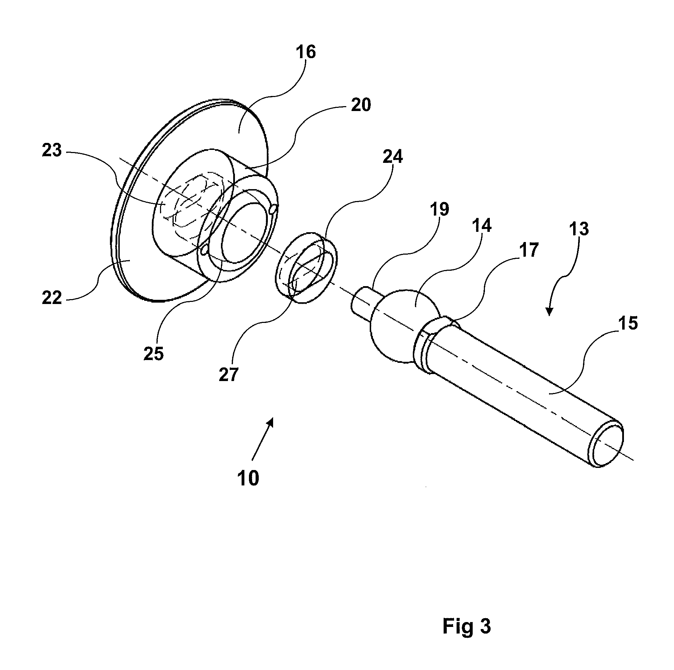

En référence aux figures 1 à 5, un dispositif de fixation 10 est destiné à solidariser un panneau 11 à une structure 12 fixe, le panneau devant résister à des contraintes climatiques et structurelles. Dans l'exemple décrit, le panneau 11 est préférentiellement un vitrage extérieur en verre, mais l'invention est applicable à tout autre type de panneau.

Le dispositif de fixation 10 est composé d'un élément de liaison 13 à tête de rotule 14 sphérique, et d'un corps de rotule 16 supportant le panneau 11. La tête de rotule 14 est prolongée d'un côté par un axe 15 allongé comprenant un fût rectiligne assujetti rigidement à la rotule 14 par une bague 17 intermédiaire. Le fût est doté d'un filetage 18 extérieur destiné à recevoir des écrous 28 de blocage pour l'assemblage de l'élément de liaison 13 à la structure 12. La longueur du fût est prévue pour autoriser un réglage prédéterminé de l'écartement du panneau 11 par rapport à la structure 12 fixe.

La tête de rotule 14 est équipée en plus d'un index 19 s'étendant à l'opposé de l'axe 15, en alignement longitudinal avec ce dernier. L'index 19 est conformé selon un plot cylindrique, lequel est plus court que l'axe 15. Le diamètre extérieur de la tête de rotule 14 est légèrement supérieur à celui du fût de l'axe 15.

Le corps de rotule 16 comporte une douille 20 cylindrique ayant un évidement 21 borgne servant de logement à la tête de rotule 14 avec interposition d'un léger jeu radial. A cet effet, le diamètre interne de la douille 20 cylindrique est légèrement supérieur à celui de la tête de rotule 14 sphérique. La douille 20 est reliée à une collerette 22 d'appui destinée à venir en engagement avec l'une des faces du panneau 11.

Le fond de l'évidement 21 est prolongé par un trou oblong 23 non débouchant pratiqué dans le corps de rotule 16 au centre de la collerette 22. Lors de l'introduction de la tête de rotule 14 de l'élément de liaison 13 dans l'évidement 21 du corps de rotule 16, l'index 19 pénètre dans le trou oblong 23, et sert ainsi de moyen de guidage et d'orientation du panneau 11 lors de son débattement. Un organe amortisseur 24 est inséré dans l'évidement 21 avant l'engagement axial de la tête de rotule 14. L'organe amortisseur 24 est formé par une rondelle en matériau plastique, notamment déformable, de manière à absorber le jeu lors de l'opération de sertissage emprisonnant la tête de rotule 14 dans l'évidement 21. L'assemblage par sertissage s'effectue par déformation de matière de l'entrée 25 de l'évidement 21 de la douille 20.

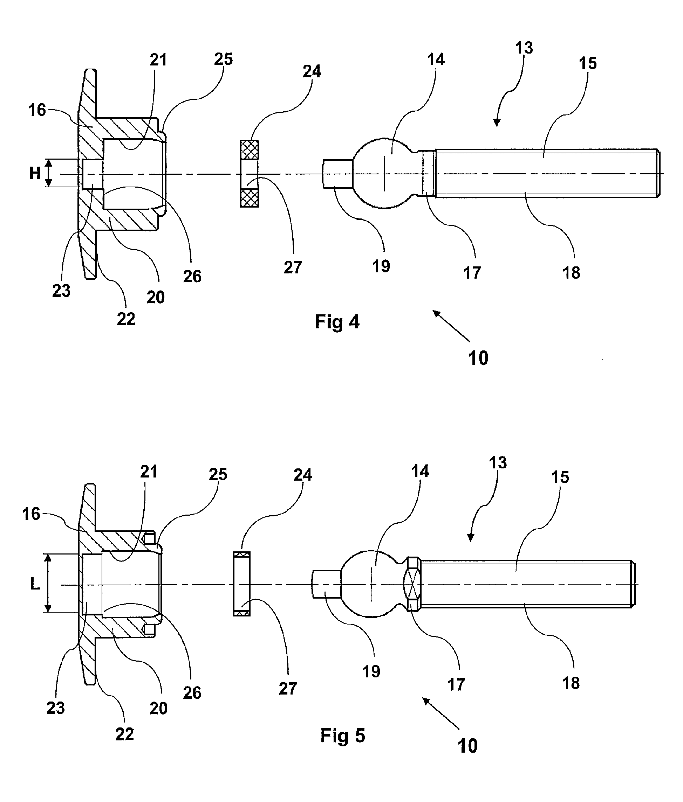

La rondelle de l'organe amortisseur 24 présente un profil extérieur circulaire qui s'ajuste dans un épaulement 26 annulaire à l'intérieur de l'évidement 21. La rondelle est pourvue d'une ouverture 27 centrale débouchante dont la forme oblongue est similaire à celle du trou oblong 23 du corps de rotule 16 (voir figures 4 et 5).

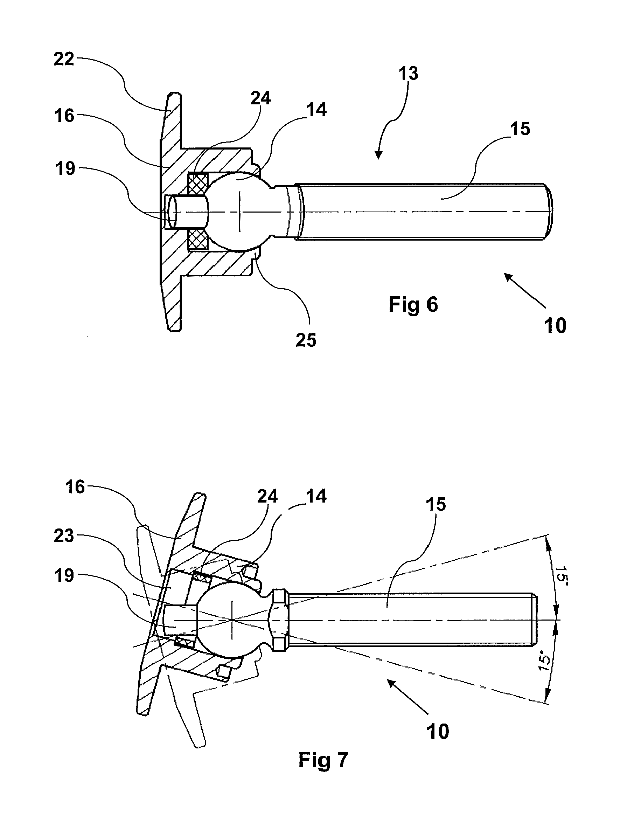

Sur les figures 6 et 7, l'élément de liaison 13 est assemblé au corps de rotule 16 après l'opération de sertissage de l'entrée 25 qui emprisonne la rotule 14 dans le logement de l'évidement 21. L'index 19 de la tête de rotule 14 traverse l'organe amortisseur 24 en butée sur l'épaulement 26, et s'engage avec un léger jeu dans le trou oblong 23 du corps de rotule 16. Dans l'exemple représenté sur les figures 6 et 7, l'élément de fixation 13 est fixe, et le corps de rotule 16 peut bouger.

Le trou oblong 23 coopère avec l'index 19 pour définir un mouvement relatif à blocage angulaire entre les deux pièces du dispositif de fixation 10. Le trou oblong 23 est configuré à cet effet pour guider et orienter l'index 19 en permettant un déplacement par pivoterment limité selon une première direction, et en bloquant tout déplacement selon une deuxième direction orthogonale à ladite première. La longueur L du trou oblong (voir figure 5) détermine l'amplitude maximum du mouvement de pivotement, tandis que l'écartement H entre les faces parallèles opposées (figure 4) correspond au diamètre de l'index 19.

La figure 6 correspond à l'état de blocage du mouvement selon la deuxième direction. Le corps de rotule 16 tubulaire reste aligné axialement avec l'élément de fixation 13, car bloqué par la réaction de l'index 19 sur les deux faces opposées du trou oblong 13.

La figure 7 correspond à l'état de déblocage du mouvement selon la première direction, dans laquelle le corps de rotule 16 se déplace sur l'index 19 dans le sens de la longueur L du trou oblong 23. Le corps de rotule 16 peut ainsi être animé d'un mouvement de pivotement limité, par exemple de +/- 15° par rapport à la direction longitudinale de l'élément de liaison 13 fixe.

Les figures 1, 2 et 2A illustrent respectivement le dispositif de fixation 10 des figures 7 et 6, appliqué au montage d'un panneau 11 en verre à une structure fixe 12 d'un bâtiment. La douille 20 du corps de rotule 16 est insérée dans un orifice du panneau 11, et un écrou 28A de serrage est vissé sur l'extrémité filetée de la douille 20 pour l'assemblage final. La tête de rotule 14 reste immobile avec l'élément de liaison 13, et c'est l'ensemble corps de rotule 16 et panneau 11 qui peut pivoter exclusivement dans la première direction (axe y) correspondant au sens de la longueur L du trou oblong 23 (figure 1). Sur la figure 2, tout déplacement angulaire est bloqué dans la deuxième direction orthogonale (axe z). La figure 2A indique schématiquement les deux possibilités bloqué ou débloqué par rapport à l'agencement du trou oblong 23.

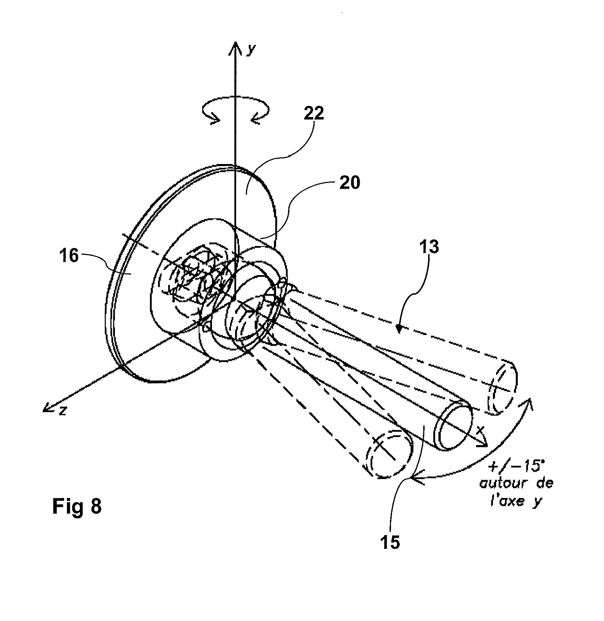

Selon la variante de la figure 8, le mouvement relatif de déplacement des deux pièces du dispositif de fixation 10 est inversé : c'est le corps de rotule 16 qui est fixe, et l'élément de liaison 13 est susceptible de pivoter de +/- 15° autour de l'axe y.

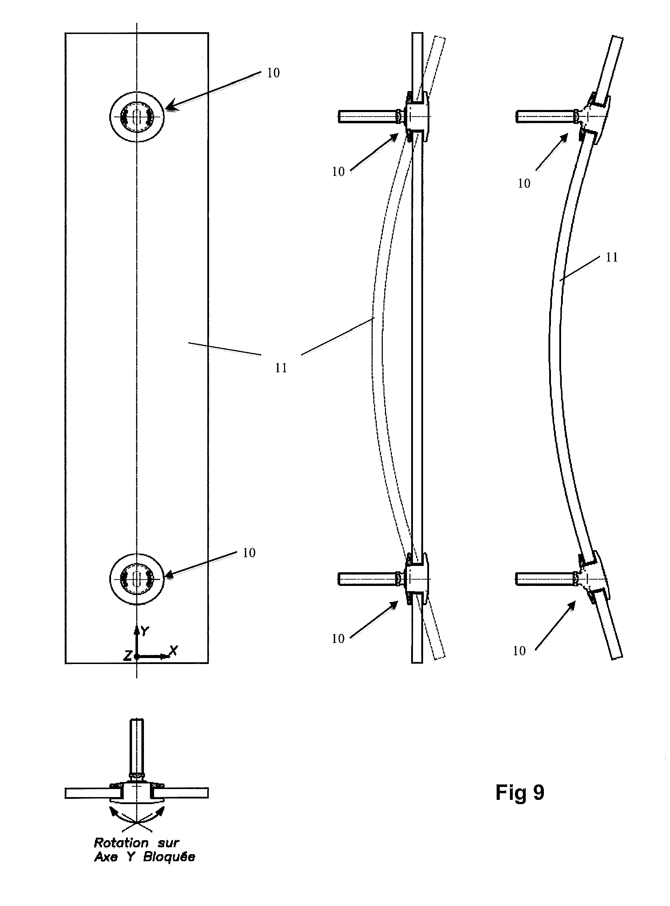

La figure 9 montre un exemple de fixation d'un panneau 11 vertical fixe, notamment d'un brise soleil. Ce panneau 11 doit résister à des déformations dues aux contraintes extérieures climatiques, et est monté à la structure au moyen d'une seule paire de dispositifs de fixation 10 à rotules selon les figures 4 à 7, au lieu de quatre rotules classiques. Le montage à deux rotules selon l'invention, permet de conserver un mouvement de rotation des dispositifs de fixation 10 pour absorber les déformations dans le sens de la longueur du panneau 11 (axe X libre), mais en empêchant la rotation du panneau 11 dans sa largeur (axe Y bloqué). Le nombre de points de fixation peut ainsi être réduit par rapport à une solution classique à quatre points, tout en ayant un axe mobile et un axe fixe.

## Revendications

1. Dispositif de fixation (10) destiné à solidariser un panneau (11) en verre à une structure (12) porteuse, le dispositif de fixation étant composé :
- d'un élément de liaison (13) doté d'une tête de rotule (14) prolongée par un axe(15) allongé à filetage (18) extérieur,
- et d'un corps de rotule (16) en forme de douille cylindrique pourvue d'un évidement (21) servant de logement à la tête de rotule(14), laquelle comporte un index (19) s'étendant à l'opposé de l'axe (15) allongé, et en alignement longitudinal avec ce dernier,
**caractérisé en ce que** :
- l'évidement (21) est cylindrique et possède un fond pourvu d'un trou oblong (23) dans lequel s'engage l'index (19) cylindrique pour définir un mouvement relatif entre la pièce de liaison (13) et le corps de rotule 16) apte à assurer un déplacement par pivotement limité selon une première direction, et un blocage angulaire inhibant tout déplacement selon une deuxième direction, orthogonale à ladite première,
- le trou oblong (23) est agencé au centre d'une collerette (22) d'appui faisant partie du corps de rotule (16), la longueur L dudit trou oblong (23) déterminant l'amplitude maximum du mouvement de pivotement, tandis que l'écartement entre les faces parallèles opposées H correspond au diamètre de l'index (19).
- et un organe amortisseur (24) est inséré dans l'évidement (21) avant l'engagement axial de la tête de rotule (14), l'organe amortisseur (24) étant formé par une rondelle en matériau plastique ayant un profil extérieur circulaire qui s'ajuste dans un épaulement (26) annulaire à l'intérieur de l'évidement (21).

2. Dispositif de fixation (10) selon la revendication 1 **caractérisé en ce que** la rondelle de l'organe amortisseur (24) est pourvue d'une ouverture 27 centrale débouchante ayant une forme oblongue similaire à celle du trou oblong (23) du corps de rotule (16).
